(19) Europäisches Patentamt
European Patent Office
Office européen des brevets

(11) **EP 1 927 954 B1**

(12) **EUROPEAN PATENT SPECIFICATION**

(45) Date of publication and mention
of the grant of the patent:
**15.05.2019 Bulletin 2019/20**

(51) Int Cl.:
***G06T 17/05*** *(2011.01)*

(21) Application number: **06024937.2**

(22) Date of filing: **01.12.2006**

(54) **TERRAIN MODELING BASED ON CURVED SURFACE AREA**

GELÄNDEMODELLIERUNG BASIEREND AUF EINEM GEKRÜMMTEN OBERFLÄCHENBEREICH

MODÉLISATION DE TERRAIN BASÉE SUR UNE ZONE DE SURFACE COURBE

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**04.06.2008 Bulletin 2008/23**

(73) Proprietor: **Harman Becker Automotive Systems
GmbH
76307 Karlsbad (DE)**

(72) Inventors:
• **STRASSENBURG-KLECIAK, Marek
22081 Hamburg (DE)**
• **MEYER, Hendrik
22307 Hamburg (DE)**

(74) Representative: **Grünecker Patent- und
Rechtsanwälte
PartG mbB
Leopoldstraße 4
80802 München (DE)**

(56) References cited:
• **GERHARD GRÖGER ET AL: "How to Get 3-D for
the Price of 2-D-Topology and Consistency of 3-D
Urban GIS" GEOINFORMATICA ; AN
INTERNATIONAL JOURNAL ON ADVANCES OF
COMPUTER SCIENCE FOR GEOGRAPHIC
INFORMATION SYSTEMS, KLUWER ACADEMIC
PUBLISHERS, BO, vol. 9, no. 2, 1 June 2005
(2005-06-01), pages 139-158, XP019206782 ISSN:
1573-7624**
• **WALTON D J: "TERRAIN MODELLING WITH
B-SPLINE TYPE SURFACES DEFINED ON
CURVED KNOT LINES" IMAGE AND VISION
COMPUTING, GUILDFORD, GB, vol. 5, 1987,
pages 37-43, XP008078450 ISSN: 0262-8856**
• **CHANGQUING Z ET AL: "DTM INTERPOLATION
MODEL BASED ON NON-UMIFORM B-SPLINES"
HUAZHONG LIGONG DAXUE XUEBAO -
JOURNAL OF HUAZHONG (CENTRAL CHINA)
UNIVERSITY OF SCIENCE AND TECHNOLOGY,
HUAZHONG LIGONG DAXUE CHUBANSHE,
WUHAN, CN, vol. 34, 1 July 2006 (2006-07-01),
pages 45-48, XP008078449 ISSN: 1000-8616**
• **ANONYMOUS: "Entfernen kolinearer
Stützstellen"[Online] 22 May 2003 (2003-05-22),
page 1, XP002432505 Retrieved from the Internet:
URL:http://web.archive.org/web/20030522160
934/http://www.aquaplan.de/public_papers/z
r/sectionKolinearZR.html> [retrieved on
2007-05-02]**

**Description**

**Field of Invention**

The present invention relates to three-dimensional terrain models as used, e.g., for the generation of digital maps. In particular, the invention relates to terrain models built on the basis of curved surface areas.

**Background of the Invention**

Digital maps as, e.g., city maps and road maps became increasingly prevalent in recent years. They represent important building blocks in, e.g., handheld and vehicle navigation systems. The electronic maps may represent cartographic features, as streets, buildings and rivers, and make use of a storage medium, e.g., a compact disk or a digital versatile disc, to store the data that relates to the cartographic features.

Digital maps can be generated by means of digital terrain models. A great variety of topographic terrain models is provided by official institutions as well as commercial providers. In principle, a digital terrain model is a digital file consisting of terrain elevations for ground positions at regularly or irregularly spaced horizontal intervals. Digital terrain products may be used in the generation of three-dimensional digital maps displaying terrain slope, the direction of slope and terrain profiles between selected points.

In a paper entitled "How to Get 3-D for the Price of 2D - Topology and Consistency of 3-D Urban GIS", Geolnformatica 9:2, pages 139-158, 2005, Gröger and Plümer describe a representation of a digital terrain model and does not relate to the problem of data resolution in the context of actually available computational resources. Walton, "Terrain Modelling With B-Spline Type Surfaces Defined on Curves Knot Lines", vol. 5, 1987, pages 37-43, XP008078450 and Changquing "DTM Interpolation Model Based on Non-Uniform B-Splines", Journal of Huazhong University of Science and Technology", vol. 34, July 2006, pages 45-28, disclose metrhods for the calculation of B-spline surfaces. A Web page of the INTERNET discloses a method for the removal of collinear nodes.

Usually, three-dimensional terrain models are obtained by airborne laser-scanning. Laser scanning systems comprise a combination of a range measuring means and a direction measuring means. In order to determine the position of a target point in addition to the distance the horizontal and vertical directions have to be determined. Therefore, the emitted laser beam has to be deflected. There are generally two methods to deviate the laser beam. Either the entire scanning unit is rotated, e.g., by stepping motors, or the laser beam is deviated by rotating mirrors. The recording of the vertical and horizontal angle of the emitted / received laser beam enables the calculation of the required directions. The combination of range and direction measurement provides the position of a target point.

Due to the data acquiring method described above, the terrain models obtained by laser-scanning are provided on a raster basis with varying resolution. The presently highest available resolution allows for digital representations of landscapes with a spacing of data points of some 25 meters.

The data grid points are typically represented by individual vertices. A vertex is a point in three-dimensional space with a particular location, usually given in terms of its x, y, and z coordinates. It is a fundamental structure in polygonal modeling wherein two vertices, taken together, can be used to define the endpoints of a line and three vertices can be used to define a planar triangle. Connections between vertices representing data grid points are obtained by means of polygons.

The quality of the resulting terrain model of the art, thus, depends on the available resolution. In addition, the demand for computational resources, in particular, the memory requirement is also dependent on the resolution of the data. This poses a severe problem for embedded systems as, e.g., vehicle navigation systems, that are usually provided with rather limited computer resources.

It is, therefore, an object of the present invention to provide a method for generating a terrain model with a variable resolution and, in particular, with relatively little data in order to save external and internal memory space while retaining a high quality of a displayed digital representation of a physical terrain.

**Description of the Invention**

The above-mentioned object is achieved by the method for generating a digital representation of a physical terrain according to claim 1 comprising the steps of

reading data of a digital terrain model including raster points having coordinates including a height coordinate that indicates height values of the raster points;

determining differences between the height values of adjacent raster points of the digital terrain model;

storing only raster points with height values that differ from the height value of at least one adjacent raster point by at least a predetermined threshold; and

calculating three-dimensional B-spline surfaces interpolating the stored raster points.

A terrain model is a three-dimensional model, e.g., a digital model of a landscape obtained by laser-scanning. A great variety of topographic terrain models is provided by official institutions as well as commercial providers. In principle, a digital terrain model is a digital file consisting of terrain elevations for ground positions at regularly or irregularly spaced horizontal intervals. The term "physical terrain" as used herein shall also comprise the three-dimensional topography of an urban area, a city, a village etc. The raster points included in the terrain model have three-dimensional coordinate values (in fact, the raster points are characterized or may be defined by the coordinate values). According to the inventive method coordinates of the raster points of the provided terrain model are read.

The term "spline" denotes a function that is defined piecewise by polynomials. Every spline function of a given degree, smoothness and domain partition, can be represented as a linear combination of B-splines (basis splines) of that same degree and smoothness. B-splines can be evaluated by the well-known (Cox) de Boor algorithm. For a given non-decreasing sequence of m-1 knots $t_i$, $i = 0, .., m$, a B-spline of degree n is a parametric curve composed of

$$C(t) = \sum_{i=1}^{m} P_i \, b_{i,n}(t)$$

where $P_i$ are control points and $b_{i,n}$ are basis functions defined by the recursion

$$b_{i,0}(t) = \begin{cases} 1, & \text{if } t_i \leq t \leq t_{i+1} \\ 0, & \text{else} \end{cases}$$

$$b_{i,n}(t) = \frac{t - t_i}{t_{i+n} - t_i} b_{i,n-1}(t) + \frac{t_{i+n+1} - t}{t_{i+n+1} - t_{i+1}} b_{i+1,n-1}(t)$$

The curve is completely contained in the convex hull of its control points provided that the basis functions all have the same sign (which usually is chosen positive). When the knots are equidistant, the B-splines are called uniform B-splines. The basis functions $b_{i,n}$ determine how strongly control points $P_i$ influence the curve. The stored raster points that form a subset of the raster points of the provided digital terrain model may be directly used as the control points $P_i$. Alternatively, a distance of these raster points to corresponding points of the three-dimensional B-spline surfaces (patches) may be minimized (see also below).

When the number of knots equals the degree of the B-spline, the latter represents a Bezier curve. Examples of B-splines that can be used in the inventive method include the constant B-spline (the most simple spline) with $b_{i,n}$ chosen as $b_{i,0}$, and the linear B-spline with

$$b_{i,1}(t) = \begin{cases} \dfrac{t - t_i}{t_{i+1} - t_i}, & \text{if } t_i \leq t \leq t_{i+1} \\ \dfrac{t_{i+2} - t}{t_{i+2} - t_{i+1}}, & \text{if } t_{i+1} \leq t \leq t_{i+2} \\ 0, & \text{else.} \end{cases}$$

,

Whereas the constant and linear B-splines are rather simple, a more satisfying interpolation can be obtained by uniform quadratic and uniform cubic B-splines. Uniform quadratic splines are calculated in matrix form for the i+1-th segment of the curve **C** by

$$C_i(t) = \begin{bmatrix} t^2 & t & 1 \end{bmatrix} \frac{1}{2} \begin{bmatrix} 1 & -2 & 1 \\ -2 & 2 & 0 \\ 1 & 1 & 0 \end{bmatrix} \begin{bmatrix} p_i \\ p_{i+1} \\ p_{i+2} \end{bmatrix}$$

and uniform cubic ones by

$$C_i(t) = [t^3 \ t^2 \ t \ 1] \frac{1}{6} \begin{bmatrix} -1 & 3 & -3 & 1 \\ 3 & -6 & 3 & 0 \\ -3 & 0 & 3 & 0 \\ 1 & 4 & 1 & 0 \end{bmatrix} \begin{bmatrix} p_i \\ p_{i+1} \\ p_{i+2} \\ p_{i+3} \end{bmatrix}.$$

The B-spline surfaces used according to the present invention can be generated by blending a mesh of B-splines using the blending function

$$Q(s,t) = \sum_{j=0}^{m} \sum_{k=0}^{n} P_{j,k} b_{j,p}(s) b_{k,q}(t)$$

where $P_{j,k}$ are locations of knots in space. A B-spline surface may also be interpreted as the surface area traversed by the curve of a moving B-spline that may change shape during the movement. The convex hull property of B-splines also holds for B-spline surfaces.

By generating the three-dimensional B-spline surfaces (patches) for interpolating the stored raster points (or the coordinates thereof) a variable resolution of a displayed digital representation of a physical terrain can be achieved and adapted according to data storage capacities and the actual processor load. The resolution of a display of a digital representation of a physical terrain does not depend on the input data but can be chosen arbitrarily. Even for a relatively low-resolution a rather accurate terrain modeling becomes possible.

Calculation of the surfaces for the digital representation of the physical terrain can be performed sufficiently rapidly in order to guarantee a fast display. In particular, usage of B-splines allows for changing the local behavior of the curves comprised in the B-spline surfaces by manipulation of one or more control points. A further advantage of the employment of B-spline surfaces lies in the fact that a more rounded terrain profile can be digitally represented as compared to the usage of standard polygons.

According to an embodiment of the above described method the calculated B-spline surfaces are uniform quadratic or uniform cubic B-spline surfaces, i.e. surfaces based on uniform quadratic or uniform cubic B-splines, respectively (see above for the corresponding basis functions). Not only can the blending function be easily pre-calculated for both uniform quadratic and uniform cubic B-spline surfaces but also both kinds of surfaces can be calculated in a numerically stable manner. Whereas calculation of the cubic version demands for more powerful computer resources than the quadratic one, the former is considered to usually represent a physical terrain more accurately.

Instead of uniform B-splines (B-spline surfaces) non-uniform ones may be employed. In particular, the B-spline surfaces may be non-uniform rational B-spline surfaces (NURBS) as, e.g., cubic NURBS or NURBS of fourth order. The characteristic feature of NURBS is that each control point is given an additional weight. NURBS, thus, represent curves in four-dimensional space, since the control points have the additional weight as a fourth coordinate.

Advantages of NURBS include invariance under affine and perspective transformations and, particularly, provision of a high flexibility to match a great variety of shapes. Moreover, they help to minimize memory consumption when storing the B-spline surfaces. In fact, very complex shapes can be represented with remarkably little data. In addition, they can be calculated very fast by numerically stable and accurate algorithms known in the art.

According to an embodiment of the herein disclosed method for generating a digital representation of a physical terrain the lowest height value of the raster points of the provided digital terrain model is stored and taken as a reference value and the height values of the stored raster points with height values that differ from the height value of at least one adjacent raster point by at least the predetermined threshold are stored as differences to the reference value. Thereby, storage space can be saved and an efficient calculation of the interpolating B-spline surfaces can be supported.

The three-dimensional B-spline surfaces may be calculated such that the squares of the Euclidean distances of the stored raster points to their corresponding points on the B-spline surfaces are minimized. For example, for raster points $P_{j,k}$ with heights $h_{j,k}$ the B-spline surfaces $Q(s,t)$ can be calculated to fulfill the condition

$$\sum_{i=0}^{m} \sum_{j=0}^{l} \left| Q_{s_j,t_i} - h_{j,k} \right|^2 \rightarrow \textit{Minimum}$$

Such a least square approach can improve the accurateness of the digital representation of the physical terrain without necessarily identifying the raster points with knots or control points.

The present invention also provides a method for displaying a digital representation of a physical terrain, comprising the steps of the method for generating a digital representation of a physical terrain according to one of the preceding claims and also comprising storing and/or displaying the calculated three-dimensional B-spline surfaces. The digital representation of a physical terrain can be displayed in form of a three-dimensional map. It is also envisioned to display the digital representation of a physical terrain on an additional display layer that is at least partly overlaid over a displayed digital two-dimensional map.

Furthermore, a computer program product is provided that comprises one or more computer readable media having computer-executable instructions for performing the steps of one of the examples of the methods described above.

The present invention, moreover, provides a digital map display means according to claim 8, comprising a database storing a subset of raster points included in a digital terrain model, wherein all of the stored raster points have height values that differ from the height values of adjacent raster points by more than a predetermined limit, i.e. no raster points are stored in the database that have similar height values within a predetermined range;

a selection means configured to select a resolution of knots between the raster points;

a calculating means configured to calculate three-dimensional B-spline surfaces by interpolation of the stored raster points with the selected resolution of knots between the raster points and to provide a display unit and/or a storage means that is configured to store the three-dimensional B-spline surfaces with the three-dimensional B-spline surfaces; and

a display unit configured to display the three-dimensional B-spline surfaces provided by the calculation means and/or to display the three-dimensional B-spline surfaces stored in the storage means.

The three-dimensional B-spline surfaces can be quadratic or cubic uniform B-spline surfaces or non-uniform rational B-spline surfaces. The digital map display means may also comprise a switching means to superimpose the three-dimensional B-spline surfaces on a two-dimensional map or to switch between the display of the former and the latter. The digital map display means is, thus, configured to calculate the B-spline surfaces using only raster points having height values that differ from the height values of adjacent raster points by more than a predetermined limit with a variable resolution that can be chosen automatically or by an operator.

Such a digital map display means can advantageously be used in a vehicle navigation system. Thus, it is provided a navigation system for a vehicle, in particular, for an automobile, comprising the digital map display means mentioned above.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1a illustrates manipulation of a rational B-spline by means of four control points and Figure 1b illustrates the local influence of control points on a curve of a rational B-spline determined by 12 control points.

Figure 2 illustrates an example for a B-spline surface and a control grid made of 5 x 5 control points.

Figure 3 is a flow chart showing fundamental steps of an example of the inventive method for generating a digital representation of a physical terrain.

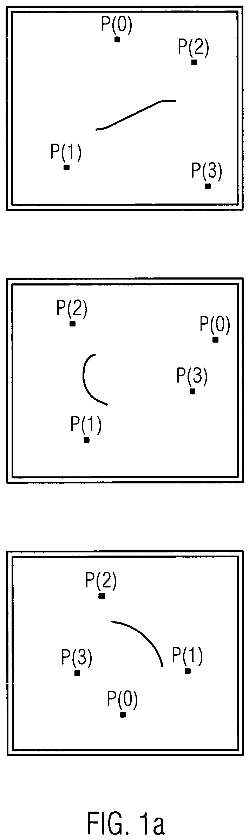

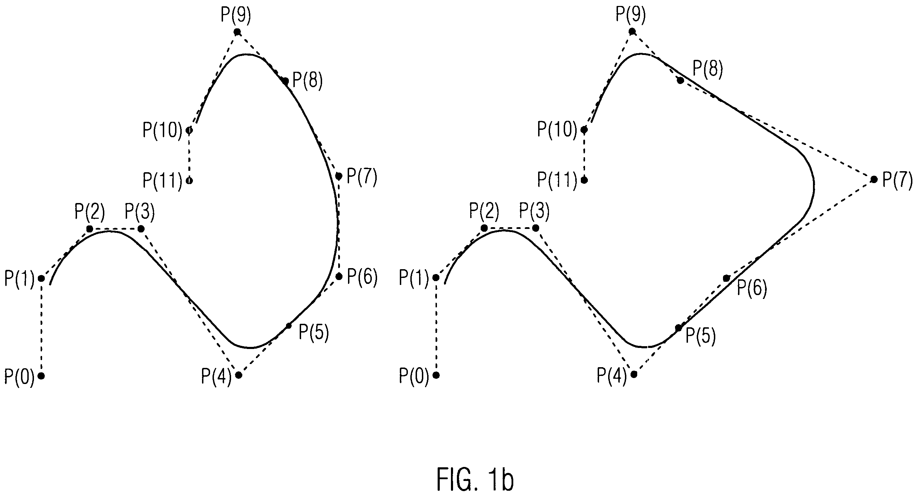

B-splines are the basic components of the B-spline surfaces employed in the present invention. Figure 1 shows an example of a uniform B-spline with four control points. The curves defined by B-splines as well as B-spline surfaces

$$C(t) = \sum_{i=1}^{m} P_i \, b_{i,n}(t) \quad \text{and} \quad Q(s,t) = \sum_{j=0}^{m} \sum_{k=0}^{n} P_{j,k} b_{j,p}(s) b_{k,q}(t) \,, \quad \text{respectively,}$$

are locally controlled by the control points. Each control point influences the part of the curve nearest to it but has little or no effect on parts of the curve that are farther away as it can easily seen from Figure 1b showing a curve with 12 control points. The curves shown in Figure 1b differ from each other only due to the position of control point $P(7)$. Connections of the control points are also shown in Figure 1b for illustration purposes. The shape of the curves shown in Figure 1a and 1b are determined by the positions of the control points in the plane including the curve (strictly speaking the projection from the mathematical four-dimensional space given by the coordinates of the control points plus an additional weight given to each control point; see above).

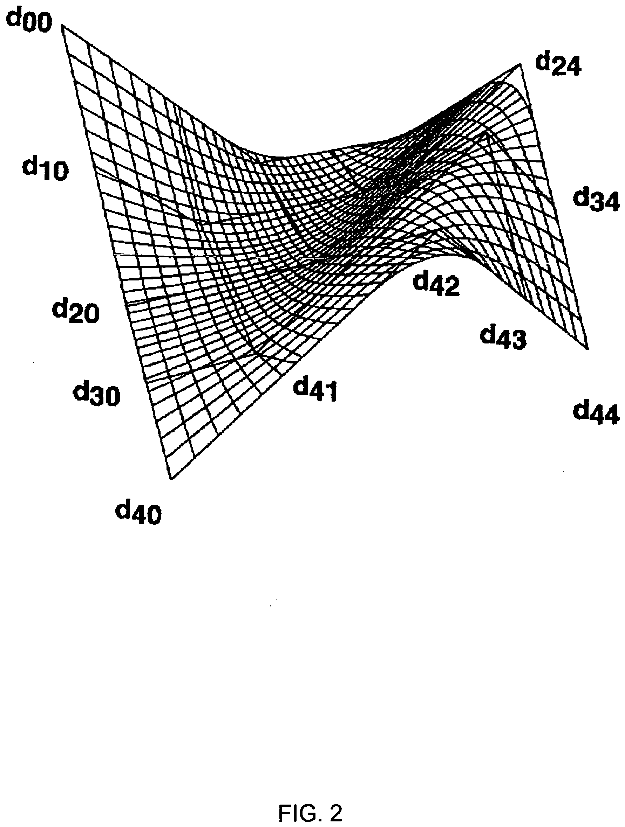

Figure 2 shows an example of a B-spline surface with a control grid defined by 5 x 5 control points. The control grid represents a visualization of lines connecting the control points (known as the control polygon). Each control point is given a weight by means of the basis functions $b_{j,p}(s)$ and $b_{k,q}(t)$. The parameters s und t are discrete parameters with

values $s_1$, $s_2$, .. $s_1$ and $t_1$, $t_2$, .., $t_m$, respectively. According to an example of the method for generating a three-dimensional digital representation of a physical terrain the spatial resolution $s_{j+1} - s_j$ (j = 0, .., l - 1) and $t_{i+1} - t_i$ (i = 0, .., m - 1), respectively, can be selected according to the desired accurateness of the digital representation or the available computer resources.

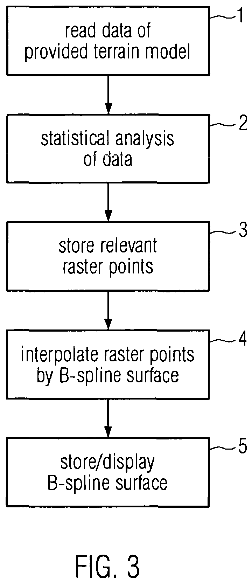

Figure 3 illustrates basic steps of the herein disclosed method for generating a three-dimensional digital representation of a physical terrain. The terrain model can be chosen from a variety of digital models offered by official providers. Digital terrain models, e.g., laser-scanned digital terrain models, are provided by local and federal governments as well as, e.g., the U.S. Department of Commerce and corresponding European administrative and governmental departments, etc.

First, data from an available digital terrain model are read 1. The data, in particular, comprise three-dimensional coordinate values of raster points (grid points) of the digital terrain model.

The read data is subject to a statistical analysis in order to reasonably reduce the number of raster points that are necessary for a reliable digital representation of the physical terrain already modeled by the provided terrain model. According to the present example the height difference between the lowest and the highest points in the provided model is determined (i.e. the difference of the values of the respective height coordinates). Moreover, the lowest point is chosen as a reference point for which the height value is stored. The height values of all the other points can be expressed as positive differences to the lowest raster point. The latter can be normalized to a height of zero.

As a next step, the raster points are determined that are relevant for the height differences of the height profile of the terrain that is to be represented. This means that for adjacent raster points with equal height values or similar height values within a predetermined limit only one of these raster points is stored. Thereby, the height value of only one of these points is stored.

The predetermined limit can, e.g., be given by a constant real number or by some percentage of difference of the respective height values or by some percentage of difference between the height values of the lowest and the highest raster points (i.e. the raster points with the lowest and highest height values, respectively), or by some percentage of the height value of the lowest or the highest raster point etc.

If, e.g., the height values at raster points $r_{u,v}$, $r_{u+1,v}$, $r_{u+2,v}$, $r_{u+3,v}$ (where the lower indices u and v represent planar coordinates, e.g., the geographical longitude and latitude) differ by some value below the predetermined limit, only one of the raster points, say, $r_{u,v}$, and thereby one of the height values is stored. Consequently, only those raster points are stored 3 that are relevant for the accurate modeling of the height profile of the physical terrain and, thus, the demand for storage capacities can significantly be reduced as compared to the originally provided digital terrain model.

The coordinates for interpolating 4 the stored raster points by B-spline surfaces are obtained from the stored height values. The calculated B-spline surfaces can be stored for a subsequent display and can also be displayed immediately after they have been calculated 5.

In matrix notation the B-spline surfaces can be calculated for the matrix G of control points by

$$Q(s,t) = \begin{pmatrix} q_x(s,t) \\ q_y(s,t) \\ q_z(s,t) \end{pmatrix} = \vec{s} \bullet M \bullet G \bullet M^T \bullet \vec{t}^{\,T}$$

where the vectors $\vec{s}$ and $\vec{t}$ denote the position for interpolation of a data point, e.g., for cubic interpolation

$$\vec{s} = \begin{pmatrix} s^3 \\ s^2 \\ s \\ 1 \end{pmatrix} \text{ and } \vec{t} = \begin{pmatrix} t^3 \\ t^2 \\ t \\ 1 \end{pmatrix}.$$

M denotes the interpolation matrix given by the interpolation based on B-splines, e.g.,

$$M = \frac{1}{6}\begin{pmatrix} -1 & 3 & -3 & 1 \\ 3 & -6 & 3 & 0 \\ -3 & 0 & 3 & 0 \\ 1 & 4 & 1 & 0 \end{pmatrix}$$

for cubic interpolation.

The resolution of the three-dimensional B-spline surfaces (patches) $s_{j+1} - s_j$ ($j = 0, .., l - 1$) and $t_{i+1} - t_i$ ($i = 0, .., m - 1$), respectively, can be chosen by an operator by hand. It might also be preferred to adjust the resolution automatically with respect to available computer resources or the kind of physical terrain that is to be modeled, for example.

**Claims**

1. A method for generating a digital representation of a physical terrain, comprising the steps of:

   reading (1) data of a digital terrain model including raster points having coordinates including a height coordinate that indicates height values of the raster points;
   determining (2) differences between the height values of adjacent raster points of the digital terrain model;
   storing (3) only those raster points with height values that differ from the height value of at least one adjacent raster point by at least a predetermined threshold; and
   calculating (4) three-dimensional B-spline surfaces interpolating the stored raster points;
   wherein the resolution of the three-dimensional B-spline surfaces is automatically adjusted with respect to available computer resources.

2. Method according to claim 1, wherein the B-spline surfaces are uniform quadratic or uniform cubic B-spline surfaces.

3. Method according to claim 1, wherein the B-spline surfaces are non-uniform rational B-spline surfaces.

4. Method according to one of the above claims, wherein the lowest height value of the raster points of the provided digital terrain model is stored and taken as a reference value and wherein the height values of the stored raster points with height values that differ from the height value of at least one adjacent raster point by at least the predetermined threshold are stored as differences to the reference value.

5. Method according to one of the preceding claims, wherein the three-dimensional B-spline surfaces are calculated such that the squares of the Euclidean distances of the stored raster points to their corresponding points on the B-spline surfaces are minimized.

6. Method according to one of the preceding claims, further comprising storing (5) and/or displaying (5) the calculated three-dimensional B-spline surfaces.

7. Computer program product, comprising one or more computer readable media having computer-executable instructions for performing the steps of the method according to one of the Claims 1 - 6.

8. Digital map display means, comprising
   a database storing a subset of raster points of a digital terrain model, wherein all of the stored raster points have height values that differ from the height values of adjacent raster points by more than a predetermined limit;
   a selection means configured to automatically select a resolution of knots between the raster points according to available computer resources;
   a calculating means configured to calculate three-dimensional B-spline surfaces by interpolation of the stored raster points with the selected resolution of knots between the raster points and to provide a display unit and/or a storage means that is configured to store the three-dimensional B-spline surfaces with the three-dimensional B-spline surfaces; and
   a display unit configured to display the three-dimensional B-spline surfaces provided by the calculation means and/or to display the three-dimensional B-spline surfaces stored in the storage means.

9. Digital map display means according to claim 8, wherein the three-dimensional B-spline surfaces are quadratic or cubic uniform B-spline surfaces or non-uniform rational B-spline surfaces.

10. Navigation system for a vehicle, in particular, for an automobile, comprising the digital map display means according to claim 8 or 9.

**Patentansprüche**

1. Verfahren zum Erzeugen einer digitalen Darstellung eines physischen Geländes, das die folgenden Schritte umfasst:

   Lesen (1) von Daten eines digitalen Geländemodells, das Rasterpunkte beinhaltet, die Koordinaten aufweisen, die eine Höhenkoordinate beinhalten, die Höhenwerte der Rasterpunkte anzeigt;
   Bestimmen (2) von Unterschieden zwischen den Höhenwerten benachbarter Rasterpunkte des digitalen Geländemodells;
   Speichern (3) nur derjenigen Rasterpunkte mit Höhenwerten, die sich von dem Höhenwert mindestens eines benachbarten Rasterpunkts um mindestens einen vorbestimmen Schwellenwert unterscheiden; und
   Berechnen (4) dreidimensionaler B-Spline-Flächen, die die gespeicherten Rasterpunkte interpolieren;
   wobei die Auflösung der dreidimensionalen B-Spline-Flächen in Bezug auf verfügbare Computerressourcen automatisch eingestellt wird.

2. Verfahren nach Anspruch 1, wobei die B-Spline-Flächen gleichmäßige quadratische oder gleichmäßige kubische B-Spline-Flächen sind.

3. Verfahren nach Anspruch 1, wobei die B-Spline-Flächen nicht gleichmäßige rationale B-Spline-Flächen sind.

4. Verfahren nach einem der vorstehenden Ansprüche, wobei der niedrigste Höhenwert der Rasterpunkte des bereitgestellten digitalen Geländemodells gespeichert und als ein Referenzwert genommen wird und wobei die Höhenwerte der gespeicherten Rasterpunkte mit Höhenwerten, die sich von dem Höhenwert mindestens eines benachbarten Rasterpunkts um mindestens den vorbestimmten Schwellenwert unterscheiden, als Unterschiede zu dem Referenzwert gespeichert werden.

5. Verfahren nach einem der vorhergehenden Ansprüche, wobei die dreidimensionalen B-Spline-Flächen derart berechnet werden, dass die Quadrate der euclidische Abstände der gespeicherten Rasterpunkte zu ihren entsprechenden Punkten auf den B-Spline-Flächen minimiert werden.

6. Verfahren nach einem der vorhergehenden Ansprüche, das ferner Speichern (5) und/oder Anzeigen (5) der berechneten dreidimensionalen B-Spline-Flächen umfasst.

7. Computerprogrammprodukt, das eines oder mehrere computerlesbare Medien umfasst, die computerausführbare Anweisungen zum Durchführen der Schritte des Verfahrens nach einem der Ansprüche 1-6 aufweist.

8. Mittel zum Anzeigen einer digitalen Karte, das Folgendes umfasst:

   eine Datenbank, die einen Teilsatz von Rasterpunkten eines digitalen Geländemodells speichert, wobei sämtliche der gespeicherten Rasterpunkte Höhenwerte aufweisen, die sich von den Höhenwerten benachbarter Rasterpunkte um mehr als eine vorbestimmte Grenze unterscheiden;
   ein Auswahlmittel, das dazu konfiguriert ist, eine Auflösung von Knoten zwischen den Rasterpunkten gemäß verfügbarer Computerressourcen automatisch auszuwählen;
   ein Berechnungsmittel, das dazu konfiguriert ist, dreidimensionale B-Spline-Flächen durch Interpolation der gespeicherten Rasterpunkte mit der ausgewählten Auflösung von Knoten zwischen den Rasterpunkten zu berechnen und eine Anzeigeeinheit und/oder ein Speichermittel bereitzustellen, die bzw. das dazu konfiguriert ist, die dreidimensionalen B-Spline-Flächen mit den dreidimensionalen B-Spline-Flächen zu speichern; und
   eine Anzeigeeinheit, die dazu konfiguriert ist, die dreidimensionalen B-Spline-Flächen, die durch das Berechnungsmittel bereitgestellt werden, anzuzeigen und/oder die dreidimensionalen B-Spline-Flächen, die auf dem Speichermittel gespeichert sind, anzuzeigen.

9. Mittel zum Anzeigen einer digitalen Karte nach Anspruch 8, wobei die dreidimensionalen B-Spline-Flächen quadratische oder kubische gleichmäßige B-Spline-Flächen oder nicht gleichmäßige rationale B-Spline-Flächen sind.

10. Navigationssystem für ein Fahrzeug, insbesondere für ein Automobil, das die Mittel zum Anzeigen einer digitalen Karte nach Anspruch 8 oder 9 umfasst.

**Revendications**

1. Procédé pour générer une représentation numérique d'un terrain physique, comprenant les étapes consistant à :

   lire (1) des données d'un modèle de terrain numérique incluant des points de trame ayant des coordonnées incluant une coordonnée de hauteur qui indique des valeurs de hauteur des points de trame ;
   déterminer (2) des différences entre les valeurs de hauteur de points de trame adjacents du modèle de terrain numérique ;
   mettre en mémoire (3) uniquement les points de trame ayant des valeurs de hauteur qui diffèrent de la valeur de hauteur d'au moins un point de trame adjacent à raison d'au moins un seuil prédéterminé ; et
   calculer (4) des surfaces B-spline tridimensionnelles interpolant les points de trame mis en mémoire ;
   dans lequel la résolution des surfaces B-spline tridimensionnelles est ajustée automatiquement par rapport à des ressources informatiques disponibles.

2. Procédé selon la revendication 1, dans lequel les surfaces B-spline sont des surfaces B-spline quadratiques uniformes ou cubiques uniformes.

3. Procédé selon la revendication 1, dans lequel les surfaces B-spline sont des surfaces B-spline rationnelles non uniformes.

4. Procédé selon l'une des revendications ci-dessus, dans lequel la valeur de hauteur la plus basse des points de trame du modèle de terrain numérique fourni est mise en mémoire et prise comme valeur de référence et dans lequel les valeurs de hauteur des points de trame mis en mémoire avec des valeurs de hauteur qui diffèrent de la valeur de hauteur d'au moins un point de trame adjacent à raison au moins du seuil prédéterminé sont mises en mémoire comme différences avec la valeur de référence.

5. Procédé selon l'une des revendications précédentes, dans lequel les surfaces B-spline tridimensionnelles sont calculées de sorte que les carrés des distances euclidiennes des points de trame mis en mémoire avec leurs points correspondants sur les surfaces B-spline sont minimisés.

6. Procédé selon l'une des revendications précédentes, comprenant en outre la mise en mémoire (5) et/ou l'affichage (5) des surfaces B-spline tridimensionnelles calculées.

7. Produit de programme informatique, comprenant un ou plusieurs supports lisibles par ordinateur ayant des instructions exécutables par ordinateur pour mener à bien les étapes du procédé selon l'une des revendications 1 à 6.

8. Moyens d'affichage de carte numérique, comprenant une base de données mettant en mémoire un sous-ensemble de points de trame d'un modèle de terrain numérique, dans lesquels la totalité des points de trame mis en mémoire ont des valeurs de hauteur qui diffèrent des valeurs de hauteur de points de trame adjacents à raison de plus d'une limite prédéterminée ;
   un moyen de sélection configuré pour sélectionner automatiquement une résolution de noeuds entre les points de trame selon des ressources informatiques disponibles ;
   un moyen de calcul configuré pour calculer des surfaces B-spline tridimensionnelles par interpolation des points de trame mis en mémoire avec la résolution sélectionnée de noeuds entre les points de trame et pour fournir une unité d'affichage et/ou un moyen de mise en mémoire qui est configuré pour mettre en mémoire les surfaces B-spline tridimensionnelles avec les surfaces B-spline tridimensionnelles ; et
   une unité d'affichage configurée pour afficher les surfaces B-spline tridimensionnelles fournies par le moyen de calcul et/ou pour afficher les surface B-spline tridimensionnelles mises en mémoire dans le moyen de mise en mémoire.

9. Moyens d'affichage de carte numérique selon la revendication 8, dans lesquels les surfaces B-spline tridimensionnelles sont des surfaces B-spline uniformes quadratiques ou cubiques ou des surfaces B-spline rationnelles non uniformes.

10. Système de navigation pour un véhicule, en particulier pour une automobile, comprenant les moyens d'affichage de carte numérique selon la revendication 8 ou 9.

FIG. 1a

FIG. 1b

EP 1 927 954 B1

FIG. 2

read data of
provided terrain model ⌐1

statistical analysis
of data ⌐2

store relevant
raster points ⌐3

interpolate raster points
by B-spline surface ⌐4

store/display
B-spline surface ⌐5

FIG. 3

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GRÖGER ; PLÜMER.** How to Get 3-D for the Price of 2D - Topology and Consistency of 3-D Urban GIS. *GeoInformatica,* vol. 9 (2), 139-158, 2005
- **WALTON.** *Terrain Modelling With B-Spline Type Surfaces Defined on Curves Knot Lines,* 1987, vol. 5, 37-43
- DTM Interpolation Model Based on Non-Uniform B-Splines. *Journal of Huazhong University of Science and Technology,* July 2006, vol. 34, 45-28